# EUROPÄISCHE PATENTSCHRIFT

(11) **EP 3 006 295 B1**
(45) Veröffentlichungstag und Bekanntmachung des Hinweises auf die Patenterteilung: **19.08.2020**
(21) Anmeldenummer: 14188343.9
(22) Anmeldetag: 09.10.2014
(51) Int. Cl.: B60W 30/095

(54) **Verfahren zum Betrieb eines Assistenzsystems eines Kraftfahrzeugs sowie Assistenzsystem**
Method for operating an assistance system of a motor vehicle and assistance system
Procédé destiné au fonctionnement d'un système d'assistance d'un véhicule automobile et système d'assistance

(43) Veröffentlichungstag der Anmeldung: 13.04.2016
(73) Patentinhaber: Continental Automotive GmbH, 30165 Hannover (DE)
(72) Erfinder: Botusescu, Adrian, 300507 Timisoara (RO); Jurca, Razvan-Calin, 300646 Timisoara (RO); Pahontu, Nicolae, 405100 Campia Turzii (RO)
(74) Vertreter: Bobbert, Christiana

(56) Entgegenhaltungen:
- EP-A1- 2 289 754
- EP-A1- 2 615 598
- DE-A1-102010 049 721
- DE-A1-102011 113 722
- DE-A1-102012 000 949
- DE-A1-102012 005 272
- JP-A- 2008 257 350
- JP-A- 2010 129 055

## Beschreibung

Die Erfindung betrifft ein Verfahren zum Betrieb eines Assistenzsystems eines Kraftfahrzeugs sowie ein gemäß dem Verfahren betriebenes Assistenzsystem.

Mit zunehmendem Verkehrsfluss auf Kraftfahrstraßen steigt die Anzahl der von dem Führer eines Kraftfahrzeugs zu verarbeitende Informationen. Hierbei müssen von dem Kraftfahrzeugführer beispielsweise Verkehrszeichen erfasst und die hieraus sich ergebenden Ver- oder Gebote befolgt werden. Zudem ist es erforderlich, das Verhalten auf die weiteren vorhandenen Verkehrsteilnehmer abzustimmen, um eine Gefährdung des Kraftfahrzeugführers selbst sowie der weiteren Verkehrsteilnehmer zu vermeiden. Hierfür ist eine vergleichsweise hohe Konzentration des Kraftfahrzeugführers erforderlich, die nicht stets gegeben ist. So ist es beispielsweise möglich, dass der Kraftfahrzeugführer einen weiteren Verkehrsteilnehmer übersieht oder dessen Reaktion falsch einschätzt, was zu einer Kollision führen kann.

Zur Entlastung des Kraftfahrzeugführers und zur Verhinderung von Kollisionen, jedoch zumindest zur Abschwächung von Kollisionen, sind Assistenzsysteme bekannt, die unterstützend auf das Fahrverhalten des Kraftfahrzeugführers einwirken. So wird beispielsweise mittels Kameras ein Verkehrsfluss um das Kraftfahrzeug überwacht und auf mögliche Gefahren hin untersucht. Diese sind beispielsweise ein Fußgänger in unmittelbarer Nähe zu dem Kraftfahrzeug oder ein vorausfahrendes weiteres Kraftfahrzeug. Sofern die geschätzte Wahrscheinlichkeit einer bevorstehenden Kollision oberhalb eines bestimmten Wertes liegt, wird mittels des Assistenzsystems die Bremse des Kraftfahrzeugs betätigt, so dass die Kollision vermieden wird, oder jedoch zumindest die Folgen einer derartigen Kollision abgemildert werden. Hierbei ist bei einem zu niedrigen Wert für die Wahrscheinlichkeit mit vergleichsweise vielen Fehlauslösungen des Assistenzsystems und daraus resultierenden Bremsmanövern zu rechnen, was einerseits den Fahrkomfort des Kraftfahrzeugführers schmälert und andererseits dessen Akzeptanz des Assistenzsystems verringert. Bei einem zu hohen Wert hingegen erfolgt keine Beeinflussung mittels des Assistenzsystems bei Situationen, die zu einer Kollision führen, die jedoch nicht als kritische Situation eingestuft wurden. Mit anderen Worten weist das Assistenzsystem in diesen Fällen keine Funktion auf.

EP 2 289 754 A1 zeigt ein Fahrzeugsteuersystem, dass die Trajektorie eines weiteren Fahrzeugs schätzt und mit der Trajektorie des eigenen Fahrzeugs vergleicht. Auf Grundlage dieses Vergleichs erkennt das Fahrzeugsteuerungssystem eine mögliche Kollision mit dem weiteren Fahrzeug.

EP 2 615 598 A1 offenbart ein Überwachungs- und Vorhersagesystem für ein Fahrzeug. Unter Heranziehen der erkannten Blinklichter wird eine Vorhersage über das zukünftige Verhalten des Fahrers erstellt und gegebenenfalls eine Warnung ausgegeben.

DE 10 2010 049721 A1 offenbart ebenfalls ein Verfahren zum Anzeigen einer kritischen Fahrsituationen. Es wird eine Trajektorie eines Fahrzeugs unter Heranziehung von Phasen einer Lichtsignalanlage vorausgesagt.

DE 10 2012 000 949 A1 zeigt eine Vorrichtung zum Warnen eines Fahrers vor einer Kollisionsgefahr. Anhand des Zustands eines Blinkers und der Bremsleuchten wird eine Trajektorie eines Fahrzeugs vorhergesagt und aus dieser eine Kollisionsgefahr bestimmt.

Der Erfindung liegt die Aufgabe zugrunde, ein besonders geeignetes Verfahren zum Betrieb eines Assistenzsystems eines Kraftfahrzeugs sowie ein Assistenzsystem eines Kraftfahrzeugs anzugeben, bei dem insbesondere die Prognose eines das Kraftfahrzeug umgebenden Verkehrsflusses verbessert ist.

Hinsichtlich des Verfahrens wird diese Aufgabe durch die Merkmale des Anspruchs 1 und hinsichtlich des Assistenzsystems durch die Merkmale des Anspruchs 7 erfindungsgemäß gelöst. Vorteilhafte Ausgestaltungen und Weiterbildungen sind Gegenstand der Unteransprüche.

Das Verfahren dient dem Betrieb eines Assistenzsystems eines Kraftfahrzeugs. In einem ersten Schritt wird ein weiteres Kraftfahrzeug erfasst, also ein Kraftfahrzeug, das sich in der Umgebung zu dem das Assistenzsystem aufweisenden Kraftfahrzeug befindet. Die Erfassung erfolgt beispielsweise mittels einer Kamera, eines Radar- und/oder Lidar-Sensors. Vorzugsweise erfolgt die Erfassung über eine bestimmte Zeitspanne. Mit anderen Worten wird das weitere Kräftfahrzeug zu einer Anzahl von bestimmten Zeitpunkten erfasst. Geeigneterweise wird die Position relativ zu dem Kraftfahrzeug bei der Erfassung bestimmt. Dem weiteren Kraftfahrzeug wird eine erste zukünftige Trajektorie zugewiesen. Unter Trajektorie wird hierbei insbesondere die Position des weiteren Kraftfahrzeugs bezüglich des Kraftfahrzeugs oder bezüglich einer bestimmten, konstanten Position zu jeweils bestimmten Zeitpunkten verstanden, wobei diese Positionen geschätzt, also prognostiziert sind. Beispielsweise wird zur Erstellung der ersten zukünftigen Trajektorie die Position des weiteren Kraftfahrzeugs für eine bestimmte Zeitspanne, im Weiteren als zeitliche Dauer der Trajektorie bezeichnet, ausgehend von der Erfassung des weiteren Kraftfahrzeugs bestimmt. Beispielsweise entspricht die erste zukünftige Trajektorie einer gleichförmigen Bewegung des weiteren Kraftfahrzeugs entlang dessen aktueller Richtung. Alternativ hierzu entspricht die erste zukünftige Trajektorie dem Verlauf der Fahrbahn, auf der sich das weitere Kraftfahrzeug befindet, sofern diese Information vorhanden ist. Beispielsweise werden Daten eines Navigationssystems des Kraftfahrzeugs abgefragt oder die Fahrbahn mittels einer Kamera des Kraftfahrzeugs erfasst. Insbesondere wird eine konstante Geschwindigkeit des weiteren Kraftfahrzeugs angenommen. Geeigneterweise ist die Anzahl der geschätzten Positionen des weiteren Kraftfahrzeugs vergleichsweise gering, z.B. beträgt die Anzahl drei, zwei, oder es wird lediglich eine einzige Position des weiteren Kraftfahrzeugs geschätzt, was zu einer Zeiteinsparung führt.

In einem weiteren Schritt wird eine aktivierte Blinkleuchte des weiteren Kraftfahrzeugs erfasst. Mittels der aktivierten Blinkleuchte wird von dem Führer des weiteren Kraftfahrzeugs eine Änderung der Fahrtrichtung und/oder des Fahrverhaltens signalisiert. Mit anderen Worten dient die aktivierte Blinkleuchte als Fahrtrichtungsanzeiger oder als Warnblinker. Zweckmäßigerweise ist das Assistenzsystem derart eingerichtet, lediglich derartige aktivierte Blinkleuchten zu erfassen, was beispielsweise mittels eines selektiven Farbfilters erfolgt. Insbesondere werden lediglich orange oder rote Blinkleuchten erfasst. Vorzugsweise erfolgt keine Erfassung von Kennleuchten und geeigneterweise von blauen Kennleuchten.

Ausgehend von der Erfassung der aktivierten Blinkleuchte wird dem weiteren Kraftfahrzeug eine zweite zukünftige Trajektorie zugewiesen, die sich von der ersten zukünftigen Trajektorie unterscheidet. Mit anderen Worten wird das Erfassen der aktivierten Blinkleuchte zur Neubestimmung der zukünftigen Trajektorie des weiteren Kraftfahrzeugs herangezogen. Auf diese Weise wird eine Absicht des Führers des weiteren Kraftfahrzeugs berücksichtigt, bevor diese Absicht in die Tat umgesetzt wurde. Infolgedessen ist die Prognoseleistung des Assistenzsystems verbessert und eine Auswertung der sich aufgrund der geänderten zweiten zukünftigen Trajektorie ergebenden Situationen kann zu einem früheren Zeitpunkt begonnen werden.

Sofern sich die aktivierte Blinkleuchte auf einer Seite des weiteren Kraftfahrzeugs befindet, die keiner weiteren Fahrbahn zugewandt ist, wird erfindungsgemäß als zweite zukünftige Trajektorie ein Stehenbleiben des weiteren Kraftfahrzeugs herangezogen. Unter Stehenbleiben wird insbesondere eine Trajektorie verstanden, die einem Abbremsen des weiteren Kraftfahrzeugs bis zu einem Stillstand entspricht, wobei das weitere Kraftfahrzeug die ursprüngliche Fahrbahn nicht verlässt. Mit anderen Worten wird erwartet, dass das weitere Kraftfahrzeug auf der Fahrbahn, auf der sich das weitere Kraftfahrzeug befindet, oder an einem Randstreifen oder dergleichen innerhalb eines gewissen, vergleichsweise kurzen Zeitabschnitts zum Stehen kommt.

Alternativ wird erfindungsgemäß ein Abbiegen des weiteren Kraftfahrzeugs von der Fahrbahn erwartet und als zweite zukünftige Trajektorie herangezogen. Insbesondere, falls ein Straßennetz, also ein Plan mit einer Anzahl an Fahrbahnen in der Umgebung des Kraftfahrzeugs zur Verfügung steht, wird als zweite zukünftige Trajektorie ein Stehenbleiben herangezogen, falls keine Abzweigung mittels des weiteren Kraftfahrzeugs innerhalb einer bestimmten Zeitspanne, beispielsweise 30 Sekunden, erreichbar ist. Sofern eine derartige Abzweigung existiert, wird als zweite zukünftige Trajektorie das Abbiegen herangezogen. Bei beiden Fällen umfasst vorzugsweise die zweite zukünftige Trajektorie eine Verringerung der Geschwindigkeit des weiteren Kraftfahrzeugs.

Sofern sich die aktivierte Blinkleuchte auf einer Seite des weiteren Kraftfahrzeugs befindet, die einer Fahrbahn zugewandt ist, die parallel und direkt benachbart zu der Fahrbahn ist, auf der das weitere Kraftfahrzeug positioniert ist, wird als zweite zukünftige Trajektorie ein Spurwechsel herangezogen. Mit anderen Worten wird als zweite zukünftige Trajektorie der Spurwechsel herangezogen, wenn sich das weitere Kraftfahrzeug auf einer von mindestens zwei zueinander parallelen Fahrbahnen befindet, und die aktivierte Blinkleuchte auf der der weiteren Fahrbahn zugewandten Seite des weiteren Kraftfahrzeugs positioniert ist. Hierbei sind die zwei Fahrbahnen beispielsweise vorgesehen, in die gleiche Richtung befahren zu werden, wie dies insbesondere bei Autobahnen der Fall ist. Alternativ sind die beiden Fahrbahnen vorgesehen, in entgegengesetzte Richtung befahren zu werden. Beispielsweise ist in diesem Fall die Intension des Führers des weiteren Kraftfahrzeugs, ein vorausfahrendes drittes Kraftfahrzeug zu überholen oder einem Hindernis auszuweichen, das sich auf dessen Fahrbahn befindet.

Geeigneterweise wird bei dem Spurwechsel eine im Wesentlichen gleichbleibende Geschwindigkeit des weiteren Kraftfahrzeugs angenommen. Vorzugsweise entspricht die angenommene Fortbewegungsrichtung der ursprünglichen Richtung. Mit anderen Worten entspricht die zweite zukünftige Trajektorie der ersten zukünftigen Trajektorie, ist jedoch um die Breite der Fahrbahn senkrecht zur Fortbewegungsrichtung des weiteren Kraftfahrzeugs versetzt. Geeigneterweise wird zur Bestimmung der zweiten zukünftigen Trajektorie eine Information der Fahrbahn herangezogen. Beispielsweise wird bei einer vergleichsweise naheliegenden und sich in Fahrtrichtung des weiteren Kraftfahrzeugs vor diesem befindenden Abzweigung oder Kreuzung eine aktivierte Blinkleuchte auch auf der weiteren Fahrbahn zugewandten Seite des weiteren Kraftfahrzeugs als ein Abbiegen herangezogen. Alternativ oder in Kombination hierzu wird der sich vor dem weiteren Kraftfahrzeug in dessen Fahrtrichtung befindende Bereich erfasst und auf ein Objekt hin überwacht. Sofern ein Objekt vorhanden ist, wird als zweite zukünftige Trajektorie ein Spurwechsel herangezogen. Sofern kein Objekt in diesem Bereich vorhanden ist, wird als zweite zukünftige Trajektorie ein Abbiegen oder Stehenbleiben des weiteren Kraftfahrzeugs herangezogen.

Vorzugsweise wird als zweite zukünftige Trajektorie ein Abbremsen des weiteren Kraftfahrzeugs herangezogen, sofern zwei aktivierte Blinkleuchten des weiteren Kraftfahrzeugs erfasst werden, wobei sich die beiden aktivierten Blinkleuchten auf unterschiedlichen Seiten des weiteren Kraftfahrzeugs befinden. Unter unterschiedlichen Seiten werden hierbei insbesondere die Längsseiten des weiteren Kraftfahrzeugs in dessen Fahrtrichtung verstanden. Mit anderen Worten wird mittels der beiden aktivierten Blinkleuchten ein Warnblinksignal von dem Führer des weiteren Kraftfahrzeugs erstellt. Zusammenfassend wird bei derart aktivierten Blinkleuchten ein Abbremsen der Geschwindigkeit des weiteren Kraftfahrzeugs erwartet, wobei die Richtung im Wesentlichen der bereits eingeschlagenen entspricht. Beispielsweise entspricht die zweite zukünftige Trajektorie einem vergleichsweise abrupten Abbremsen im Vergleich zur ersten zukünftigen Trajektorie, wobei stets von einer Weiterbewegung des weiteren Kraftfahrzeugs ausgegangen wird. Mit anderen Worten wird der zweiten zukünftigen Trajektorie kein Ortspunkt zugeordnet, an dem das weitere Kraftfahrzeug zum Stehen kommt. Vielmehr wird von einer Bewegung des weiteren Kraftfahrzeugs ausgegangen, wobei die Geschwindigkeit jedoch im Vergleich zur ersten zukünftigen Trajektorie reduziert ist. Alternativ hierzu wird keine Weiterbewegung des weiteren Kraftfahrzeugs erwartet, sodass als zweite zukünftige Trajektorie ein Stehenbleiben des weiteren Kraftfahrzeugs herangezogen wird.

Vorzugsweise wird das weitere Kraftfahrzeug anhand einer weiteren Leuchte erfasst. Als weitere Leuchte wird vorzugsweise ein Frontscheinwerfer oder zwei Frontscheinwerfer, eine Heckleuchte oder zwei Heckleuchten herangezogen. Sofern jeweils zwei derartige Leuchten zur Erfassung des weiteren Kraftfahrzeugs herangezogen werden, ist eine Zuordnung der aktivierten Blinkleuchte zu einer der Seiten des weiteren Kraftfahrzeugs vereinfacht. Alternativ hierzu wird ein Kraftfahrzeugkennzeichen des weiteren Kraftfahrzeugs oder eine Beleuchtung dieses Zeichens zur Erfassung des weiteren Kraftfahrzeugs herangezogen. Ein derartiges Zeichen befindet sich meist im Wesentlichen mittig des weiteren Kraftfahrzeugs an dessen Stirn- und Frontseite, so dass auf diese Weise ebenfalls eine vergleichsweise sichere Zuordnung der aktivierten Blinkleuchte zu einer der Seiten des weiteren Kraftfahrzeugs ermöglicht ist. Aufgrund der Heranziehung einer weiteren Leuchte ist zudem eine Identifizierung des weiteren Kraftfahrzeugs vereinfacht, da diese bei deren Aktvierung einen vergleichsweise großen Kontrast zu deren Umwelt aufweist. Mit anderen Worten ist im Bereich der Leuchten die Helligkeit im Vergleich zu der Umgebung erhöht. Bei nicht aktivierten Leuchten sind beispielsweise Spiegelreflexe aufgrund von Hohlspiegeln der Leuchten vorhanden, die eine Erfassung erleichtern.

Vorzugsweise wird mittels einer Kamera, die insbesondere Bestandteil des Assistenzsystems ist, eine Serie von Bildern erstellt, wobei jedes Bild ein Abbild des weiteren Kraftfahrzeugs aufweist. Die einzelnen Bilder der Serie unterscheiden sich anhand des Zeitpunkts der Aufnahme, wobei der Zeitabstand zwischen zwei aufeinander folgenden Bildern der Serie insbesondere konstant ist. Mit anderen Worten weist jedes der Bilder einen unterschiedlichen Zeitstempel auf. Vorzugsweise beträgt der zeitliche Abstand zwischen zwei aufeinander folgenden Bildern der Serie 1 Sekunde, 0,5 Sekunden, 0,2 Sekunden oder darunter. Vorzugsweise ist der zeitliche Abstand kleiner als 5 Sekunden. Innerhalb jedes Bildes wird die Lichtintensität bestimmt und bei einer Schwankung der Lichtintensität, also einem Unterschied der Lichtintensität aufeinander folgender Bilder, eine aktivierte Blinkleuchte erfasst. Insbesondere ist hierbei das Vorzeichen des Unterschiedes zumindest abschnittsweise entgegengesetzt. Mit anderen Worten wechselt sich ein Abnehmen der Lichtintensität mit einer Zunahme der Lichtintensität ab.

Vorzugsweise wird zunächst innerhalb des Abbildes des weiteren Kraftfahrzeugs die Blinkleuchte bestimmt und in einem weiteren Schritt die Lichtintensität in dem Bereich des Abbilds der Blinkleuchte. Auf diese Weise ist ein fehlerhaftes Identifizieren von weiteren Objekten, wie beispielsweise eine Straßenmarkierung oder eine Straßenbeleuchtung, als aktivierte Blinkleuchte ausgeschlossen. Insbesondere wird mittels der Serie von Bildern ein Lichtmuster der aktivierten Blinkleuchte des weiteren Kraftfahrzeugs ermittelt. Sofern die aktivierte Blinkleuchte eine Anzahl von einzelnen Lichtquellen zur Erzeugung eines Lichtmusters umfasst, beispielsweise einer Welle oder dergleichen, wird dieses Lichtmuster mittels Analyse der Serie von Bildern ermittelt. Hierbei wird anhand jedes Bildes der Serie die Position der jeweils aktivierten Lichtquellen bestimmt und hieraus das Muster abgeleitet. Anhand des bestimmten Musters wird vorzugsweise die zweite zukünftige Trajektorie bestimmt. Sofern das Muster in eine bestimmte Richtung weist, beispielsweise als Wellenbewegung, wird als zweite zukünftige Trajektorie ein Abbiegen oder ein Spurwechsel in diese Richtung herangezogen. Sofern die Richtung auf einen Randbereich der Fahrbahn gerichtet ist, an dem sich keine weitere Fahrbahn anschließt und in dessen näherer Umgebung keine Abzweigung oder dergleichen vorhanden ist, wird hingegen beispielsweise als zweite zukünftige Trajektorie ein Stehenbleiben herangezogen.

Besonders bevorzugt wird die zweite zukünftige Trajektorie mit der zukünftigen Trajektorie des Kraftfahrzeugs selbst verglichen. Mit anderen Worten wird dem Kraftfahrzeug, das das Assistenzsystem aufweist, ebenfalls eine zukünftige Trajektorie zugewiesen, wobei diese beispielsweise einer im Wesentlichen gleichförmigen Bewegung entlang der Fahrbahn entspricht, auf der sich das Kraftfahrzeug befindet. Insbesondere wird hierbei der Abstand zwischen der zukünftigen Trajektorie des Kraftfahrzeugs und der zweiten zukünftigen Trajektorie des weiteren Kraftfahrzeugs ermittelt.

Zweckmäßigerweise wird hierfür für einen bestimmten Zeitabschnitt, beispielsweise 10 Sekunden, ausgehend von dem aktuellen Zeitpunkt die Position jedes der beiden Kraftfahrzeuge in jeweils einem bestimmten Zeitabstand ermittelt, der beispielsweise 1 Sekunde beträgt. Mit anderen Worten werden pro Kraftfahrzeug zehn zukünftige Positionen bestimmt, die jeweils auf der zugeordneten zukünftigen Trajektorie liegen. Jeder dieser Positionspunkte des Kraftfahrzeugs wird mit dem jeweils zeitlich korrespondierenden Positionspunkt des weiteren Kraftfahrzeugs verglichen. Mit anderen Worten wird der örtliche Abstand zwischen jeweils zweien dieser Punkte ermittelt. Sofern der Abstand einen Schwellwert unterschreitet, wird ein Signal ausgegeben. Der Schwellwert korrespondiert hierbei beispielsweise mit einer Kollision der beiden Kraftfahrzeuge oder zumindest einer Entfernung zwischen den beiden Kraftfahrzeugen, bei der eine Kollision vergleichsweise wahrscheinlich ist, beispielsweise 2 cm.

Zusammenfassend wird das Signal ausgegeben, wenn der Abstand zwischen den beiden zukünftigen Trajektorien den Schwellwert unterschreitet, wobei der Abstand sowohl zeitlich als auch örtlich bestimmt wird. Als Signal wird beispielsweise eine Meldung an den Fahrer des Kraftfahrzeugs ausgegeben. Zweckmäßigerweise wird diese Warnung auf einem Multifunktionsdisplay des Kraftfahrzeugs ausgegeben oder auf eine Frontscheibe des Kraftfahrzeugs projiziert. Alternativ oder in Kombination hierzu wird aufgrund des Signals eine Warnblinkanlage oder eine Hupe des Kraftfahrzeugs aktiviert. Auf diese Weise wird der Fahrer des weiteren Kraftfahrzeugs von der Situation in Kenntnis gesetzt, so dass dieser dessen Fahrweise erneut auf dessen erste zukünftige Trajektorie anpassen kann.

Vorzugsweise wird das Signal einem weiteren Assistenzsystem des Kraftfahrzeugs zugeführt, mittels dessen die Trajektorie des Kraftfahrzeugs selbst beeinflusst werden kann. Beispielsweise wird aufgrund des Signals ein Bremsassistent oder ein Lenkassistent aktiviert, mittels dessen die Geschwindigkeit des Kraftfahrzeugs verzögert wird bzw. die Fahrtrichtung des Kraftfahrzeugs verändert wird. Beispielsweise erfolgt aufgrund des Signals eine Aktivierung von Sicherheitssystemen, mittels derer beispielsweise elektrisch betätigte Fenster geschlossen werden und/oder ein Gurtband gestrafft wird. Mit anderen Worten wird das Signal als Precrash-Signal herangezogen. Auf diese Weise ist bei einer drohenden Kollision der Führer des Kraftfahrzeugs bereits zu einem vergleichsweise frühen Zeitpunkt in einer sicheren Position. Vorzugsweise wird in Abhängigkeit des Signals zumindest eine Auslöse- oder Regelschwelle des weiteren Assistenzsystems verändert. Alternativ wird das weitere Assistenzsystem in Abhängigkeit des Signals direkt aktiviert, also veranlasst dessen jeweilige Funktionalität auszuführen. Das weitere Assistenzsystem ist insbesondere ein Assistenzsystem zur Kollisionswarnung (Forward Collsion Warning), ein adaptiver Tempomat (adaptive Cruise Control), ein Überholassistent (Lane Change Assist), ein Notbremsassistent (emergency brake assist) oder ein Assistenzsystem zur Totwinkelüberwachung (Blind Spot Detection).

Vorzugsweise wird die zweite zukünftige Trajektorie mittels eines Sensorsystems bestätigt. Mit anderen Worten wird das weitere Kraftfahrzeug nach Zuweisung der zweiten zukünftigen Trajektorie weiterhin überwacht, ob dieses tatsächlich der zweiten zukünftigen Trajektorie folgt. Als Sensorsystem wird beispielsweise ein Radar- oder ein Lidar-System herangezogen. Sofern das weitere Kraftfahrzeug der zweiten zukünftigen Trajektorie nicht folgt, wird die zweite zukünftige Trajektorie geeigneterweise verworfen und eine weitere zukünftige Trajektorie erstellt oder erneut die erste zukünftige Trajektorie herangezogen. Ein derartiger Fall tritt beispielsweise bei einem versehentlichen Aktivieren der Blinkleuchte durch den Fahrer des weiteren Kraftfahrzeugs ein. Sofern ein Signal auf Basis der zweiten zukünftigen Trajektorie ausgegeben wurde, wird in diesem Fall vorzugsweise die Ausgabe des Signals beendet. Insbesondere wird zusätzlich ein weiteres Signal ausgegeben, das das vorhergehende Signal entsprechend korrigiert. Beispielsweise wird dem Fahrer des Kraftfahrzeugs mitgeteilt, dass keine kritische Situation vorliegt.

Das Assistenzsystem eines Kraftfahrzeugs ist vorgesehen und eingerichtet, ein weiteres Kraftfahrzeug zu erfassen sowie dem weiteren Kraftfahrzeug eine erste zukünftige Trajektorie zuzuweisen. Ferner ist das Assistenzsystem vorgesehen und eingerichtet, eine aktivierte Blinkleuchte des weiteren Kraftfahrzeugs zu erfassen und dem weiteren Kraftfahrzeug eine zweite zukünftige Trajektorie zuzuweisen, die von der ersten zukünftigen Trajektorie abweicht. Geeigneterweise umfasst das Assistenzsystem eine Steuereinrichtung, mittels derer diese Schritte ausgeführt werden. Insbesondere umfasst das Assistenzsystem eine Kamera, mittels derer zumindest die aktivierte Blinkleuchte erfasst und zweckmäßigerweise ebenfalls das weitere Kraftfahrzeug erfasst wird. Zweckmäßigerweise weist das Assistenzsystem eine Ausgabevorrichtung zur Ausgabe eines Signals auf, beispielsweise eine Schnittstelle zu weiteren Assistenzsystemen oder ein Multifunktionsdisplay. Insbesondere ist das Assistenzsystem vorgesehen und eingerichtet, das Kraftfahrzeug zumindest teilautonom zu steuern, also Fahrbewegungen des Kraftfahrzeugs zumindest teilweise zu beeinflussen.

Nachfolgend werden Ausführungsbeispiele der Erfindung anhand einer Zeichnung näher erläutert. Darin zeigen:
- Fig. 1: schematisch vereinfacht ein Assistenzsystem eines Kraftfahrzeugs,
- Fig. 2: ein Verfahren zum Betrieb des Assistenzsystems,
- Fig. 3a-c: eine Serie von Bildern, und
- Fig. 4-10: jeweils schematisch vereinfacht das Kraftfahrzeug und ein weiteres Kraftfahrzeug.

Einander entsprechende Teile sind in allen Figuren mit den gleichen Bezugszeichen versehen.

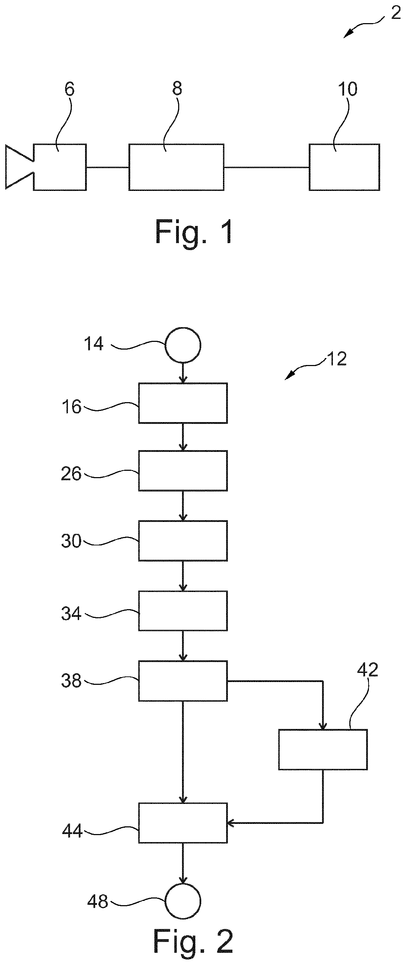

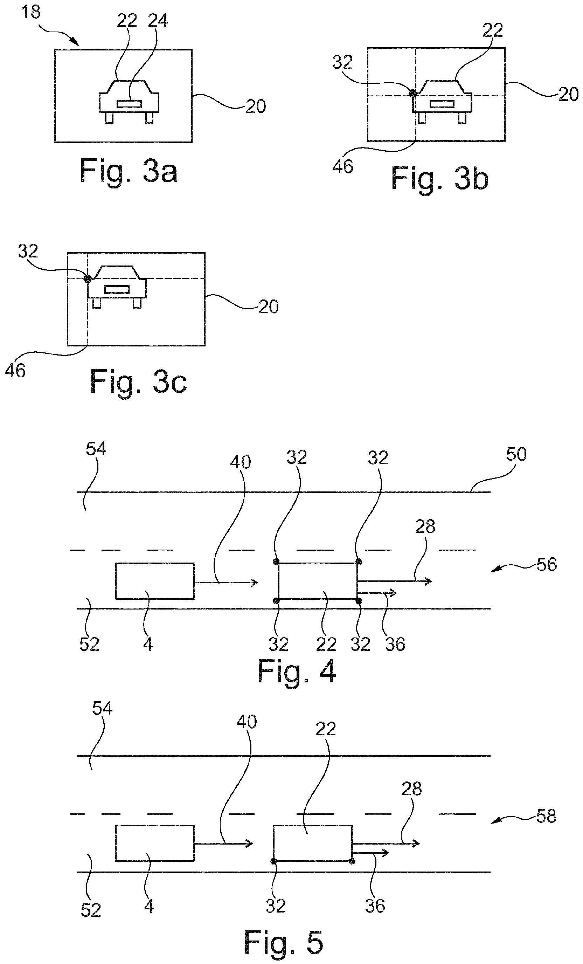

In Fig. 1 ist schematisch vereinfacht ein Assistenzsystem 2 eines in Fig. 4 - 10 gezeigten Kraftfahrzeugs 4 schematisch vereinfacht dargestellt. Das Assistenzsystem 2 weist eine Kamera 6 auf. Ferner umfasst das Assistenzsystem 2 eine Recheneinheit 8 sowie eine Signaleinrichtung 10, die signaltechnisch miteinander gekoppelt sind. Hierbei werden mittels der Recheneinheit 8 die mittels der Kamera 6 erstellten Bilder analysiert. Die Signaleinrichtung 10 ist ein Head-up-Display, mittels dessen Informationen auf die Frontscheibe des Kraftfahrzeugs 4 projiziert werden.

Das Assistenzsystem 2 ist gemäß einem in Fig. 2 dargestellten Verfahren 12 betrieben. Nach einem Startereignis 14 wird in einem ersten Arbeitsschritt 16 mittels der Kamera 8 eine in den Fig. 3a -3c gezeigte Serie 18 von Bildern 20 erstellt. Die Serie 18 umfasst hierbei eine größere Anzahl als die in den Fig. 3a bis 3c gezeigten Bilder 20, wobei sich der Zeitpunkt der Aufnahme der einzelnen Bilder jeweils um 0,5 Sekunden unterscheidet. Innerhalb des ersten gezeigten Bildes 20 wird ein weiteres Kraftfahrzeug 22 erfasst, wobei eine Kennzeichenbeleuchtung 24 zur Erfassung des weiteren Kraftfahrzeugs 22 herangezogen wird. Mit anderen Worten wird das Bild 20 auf das Vorhandensein der Kennzeichenbeleuchtung 24 überprüft. Sofern die Kennzeichenbeleuchtung 24 identifiziert wurde, ist das weitere Kraftfahrzeug 22 erfasst.

In einem zweiten Arbeitsschritt 26 wird dem weiteren Kraftfahrzeug eine erste zukünftige Trajektorie 28 (Fig. 4 bis 10) zugewiesen. Dies erfolgt mittels Analyse einer Anzahl der Bilder 20 der Serie 18. Hieraus wird die Geschwindigkeit des weiteren Kraftfahrzeugs 22 sowie dessen Richtung abgeleitet. Alternativ hierzu wird ein Radar-System zur Ermittlung dieser Daten herangezogen. Die erste zukünftige Trajektorie 28 entspricht hierbei einer Bewegung des weiteren Kraftfahrzeugs 22 entlang dessen ursprünglichen Richtung mit ebenfalls der ursprünglichen Geschwindigkeit. Mit anderen Worten wird als erste zukünftige Trajektorie 28 eine gleichförmige Bewegung des weiteren Kraftfahrzeugs 22 herangezogen.

In einem dritten Arbeitsschritt 30 wird eine in Fig. 3b gezeigte aktive Blinkleuchte 32 des weiteren Kraftfahrzeugs 22 erfasst, wobei die aktivierte Blinkleuchte 32 anhand einer Schwankung der Lichtintensität der einzelnen Bilder 20 der Serie 18 bestimmt wird. Die aktivierte Blinkleuchte 32 sendet periodisch einen Lichtblitz aus, der mittels einiger der Bilder 20 der Serie 18 abgebildet ist, wohingegen eine weitere Anzahl der Bilder 20 keinen Lichtblitz abbildet. Sofern dies mittels der Recheneinheit 8 erfasst wurde, ist die aktivierte Blinkleuchte 32 bestimmt. In einem vierten Arbeitsschritt 34 wird dem weiteren Kraftfahrzeug 22 eine zweite zukünftige Trajektorie 36 (Fig. 4 bis 10) zugewiesen, die sich von der ersten zukünftigen Trajektorie 28 unterschreitet. In einem fünften Arbeitsschritt 38 wird die zweite zukünftige Trajektorie 36 mit einer zukünftigen Trajektorie 40 des Kraftfahrzeugs 4 verglichen. Hierbei werden im 1 Sekunden-Takt die zukünftigen Abstände der beiden Kraftfahrzeuge 4,22 anhand deren jeweilige zukünftiger Trajektorie 40,36 bestimmt. Bei Unterschreiten eines Schwellwerts durch die auf diese Weise bestimmten Abstände wird in einem sechsten Arbeitsschritt 42 mittels der Signaleinrichtung 10 ein Signal ausgegeben und der Führer des Kraftfahrzeugs 4 auf eine drohende Kollision hingewiesen. Ferner werden die Bremsen des Kraftfahrzeugs 4 aufgrund des Signals betätigt, sodass sich die Geschwindigkeit des Kraftfahrzeugs 4 verringert.

In einem siebten Arbeitsschritt 44 wird die zweite zukünftige Trajektorie 36 bestätigt. Hierfür wird entweder ein nicht dargestelltes Radar-System oder die Kamera 6 selbst herangezogen, wie in Fig. 3c dargestellt. Hierbei wird die Position 46 der aktivierten Blinkleuchte 32 verglichen, wobei zum Vergleich das in Fig. 3b gezeigte Bild 20 bei erstmaligem Erfassen der aktivierten Blinkleuchte 32 sowie die darauf folgenden Bilder 20 der Serie 18 herangezogen werden bis zu dem 10 Sekunden nach erstmaliger Erfassung der aktivierten Blinkleuchte 32 aufgenommenen Bild 20, das in Fig. 3c dargestellt ist. Anhand dieses Bildes 20 wird die aktuelle Position des weiteren Kraftfahrzeugs 22 bestimmt und mit der hierzu korrespondierenden Position der zweiten zukünftigen Trajektorie 36 verglichen. Bei einer Übereinstimmung wird die zweite zukünftige Trajektorie 36 beibehalten, wohingegen bei einer signifikanten Abweichung die zweite zukünftige Trajektorie 36 verworfen wird. Im Anschluss hieran wird das Verfahren 12 in einem letzten Arbeitsschritt 48 beendet.

In Fig. 4 ist in einer Draufsicht schematisch vereinfacht das Kraftfahrzeug 4 und das weitere Kraftfahrzeug 22 dargestellt, die entlang einer Straße 50 mit einer ersten Fahrbahn 52 und einer hierzu parallelen zweiten Fahrbahn 54 bewegt werden. Die beiden Kraftfahrzeuge 4,22 sind auf der ersten Fahrbahn 52 positioniert und die Fortbewegungsrichtung ist die gleiche. Vor Aktivierung der Blinkleuchten 32 des weiteren Kraftfahrzeugs 22 ist die Geschwindigkeit der beiden Kraftfahrzeuge 4,22 gleich, so dass der Abstand zwischen dem Kraftfahrzeug 4 und dem weiteren Kraftahrzeug 22 im Wesentlichen konstant ist. Bei der in Fig. 4 dargestellten Situation werden sämtliche Blinkleuchten 32 des weiteren Kraftfahrzeugs 22 aktiviert, wobei mittels des Kraftfahrzeugs 4 lediglich die diesem zugewandten Blinkleuchten 32 erfasst werden. Diese befinden sich an unterschiedlichen Seiten des weiteren Kraftfahrzeugs 22. Infolge der auftretenden Warnblinkanlage wird als zweite Trajektorie 36 folglich ein Abbremsen 56 herangezogen. Bei einer Fortbewegung des Kraftfahrzeugs 4 mit weiterhin konstanter Geschwindigkeit würde demnach in einem bestimmten Zeitintervall eine Kollision stattfinden. Um dies zu vermeiden wird der sechste Arbeitsschritt 42 ausgeführt und mittels der Signaleinrichtung 10 das Signal ausgegeben.

In Fig. 5 ist ein Stehenbleiben 58 dargestellt, das als zweite Trajektorie 36 herangezogen wird. Da lediglich die Blinkleuchten 32 einer der Seiten des weiteren Kraffahrzeugs 22 aktiviert sind, liegt kein Warnsignal gemäß Fig. 4 vor. Die aktivierten Signalleuchten 32 befinden sich hierbei auf der der zweiten Fahrbahn 54 abgewandten Seite des weiteren Kraftfahrzeugs 22, auf der keine weitere Fahrbahn vorhanden ist. Die zweite zukünftige Trajektorie 36 weist ein örtliches Ende auf, also einen Punkt, ab dem das weitere Kraftfahrzeug 22 keine Bewegung mit in die ursprüngliche Bewegungsrichtung ausführt. Auch in diesem Fall würde bei einer Bewegung des Kraftfahrzeugs 4 weiterhin mit einer konstanten Geschwindigkeit ebenfalls eine Kollision erfolgen, so dass ebenfalls der sechste Arbeitsschritt 42 ausgeführt und mittels der Signaleinrichtung 10 das Signal ausgegeben wird

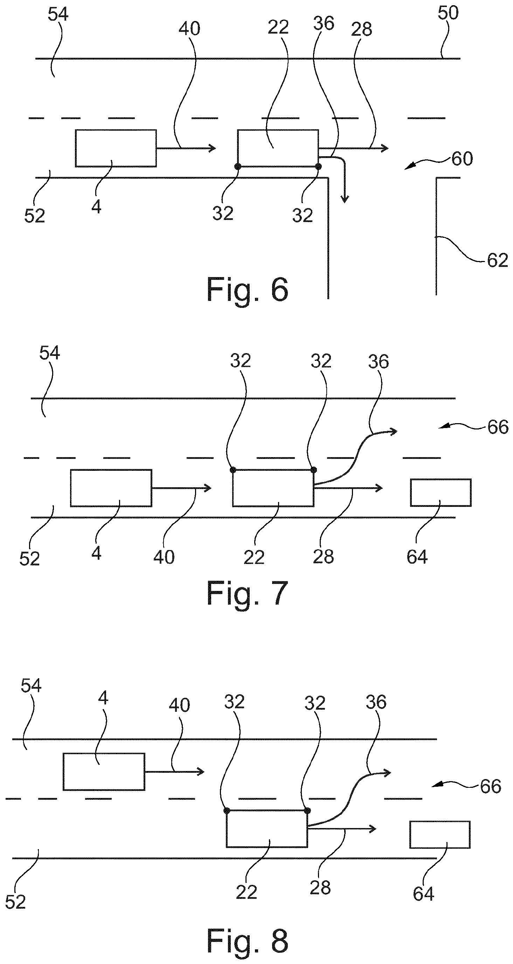

Bei der in Fig. 6 dargestellten Situation sind wiederum die der zweiten Fahrbahn 54 gegenüberliegenden Blinkleuchten 32 des weiteren Kraftfahrzeugs 22 aktiviert. Zusätzlich werden Informationen bezüglich der Straße 50 berücksichtigt. Als zweite Trajektorie 36 wird nämlich ein Abbiegen 60 in eine Seitenstraße 62 herangezogen, die sich auf der Seite des weiteren Kraftfahrzeugs 22 befindet, auf der die aktivierten Blinkleuchten 32 positioniert sind. Zwar wird in diesem Fall ebenfalls eine verringerte Geschwindigkeit des weiteren Kraftfahrzeugs bei Folgen der zweiten zukünftigen Trajektorien 36 angenommen, jedoch ist der Abstand zu dem Kraftfahrzeug 4 aufgrund der Richtungsänderung stets oberhalb des Schwellwerts, sodass keine Signalausgabe mittels der Signaleinrichtung 10 erfolgt.

Bei der in Fig. 7 dargestellten Situation sind auf der ersten Fahrbahn 52 das Kraftfahrzeug 4, das weitere Kraftfahrzeug 22 und ein drittes Kraftfahrzeug 64 positioniert, deren Bewegungsrichtung gleich ist, wobei die Geschwindigkeit des Kraftfahrzeugs 4 und des weiteren Kraftfahrzeugs 22 im Wesentlichen gleich ist. Dahingegen bewegt sich das dritte Kraftfahrzeug 64 mit einer verminderten Geschwindigkeit. Vor Erfassung der aktivierten Blinkleuchte 32 entspricht die erste zukünftige Trajektorie 28 sowie die zukünftige Trajektorie 40 des Kraftfahrzeugs 4 denen der vorhergehenden gezeigten Situation. Im Unterschied hierzu werden die der zweiten Fahrbahn 54 zugewandten Blinkleuchten 32 des weiteren Kraftfahrzeugs 22 aktiviert. Infolgedessen wird als zweite zukünftige Trajektorie 36 des weiteren Kraftfahrzeugs 22 ein Spurwechsel 66 des weiteren Kraftfahrzeugs 22 von der ersten Fahrbahn 52 herangezogen. Hieraus wird auf das Vorhandensein des dritten Kraftfahrzeugs 64 geschlossen, das mittels der Sensoren des Kraftfahrzeugs 4 aufgrund der abschirmenden Wirkung des weiteren Kraftfahrzeugs 22 selbst nicht erfassbar ist.

In Fig. 8 ist im Vergleich zu der vorher gezeigten Situation das Kraftfahrzeug 4 auf der zweiten Fahrbahn 54 positioniert, wobei die Geschwindigkeit und die Richtung jeweils denen in der vorhergehenden Situation gezeigten entsprechen. Auch das weitere Kraftfahrzeug 22 sowie dessen erste zukünftige Trajektorie 28 als auch das dritte Kraftfahrzeug 64 entsprechen dem vorhergehenden Beispiel. Zudem wird nach Erfassung der der zweiten Fahrbahn 54 zugewandten aktivierten Blinkleuchten 32 der Spurwechsel 66 als zweite zukünftige Trajektorie 36 herangezogen. Bei einem Vergleich der zukünftigen Trajektorie 40 und der zweiten zukünftigen Trajektorie 36 wird ein Abstand realisiert, der unterhalb des Schwellwerts ist. Mit anderen Worten wurde bei einer Bewegung des weiteren Kraftfahrzeugs 22 entlang der zweiten zukünftigen Trajektorie 36 und einer Bewegung des Kraftfahrzeugs 40 entlang dessen zukünftiger Trajektorie 40 der Abstand zwischen den beiden Kraftfahrzeugen den Schwellwert unterschreiten, was einer Kollision zwischen den beiden Kraftfahrzeugen 4,22 entsprechen würde. Infolgedessen wird die Signaleinrichtung 10 betätigt und ein Signal ausgegeben, das den Führer des Kraftfahrzeugs 4 auf diese Situation hinweist. Zudem werden autonom die Bremsen des Kraftfahrzeugs 4 betätigt, so dass die zukünftige Trajektorie 40 des Kraftfahrzeugs 4 abgewandelt ist.

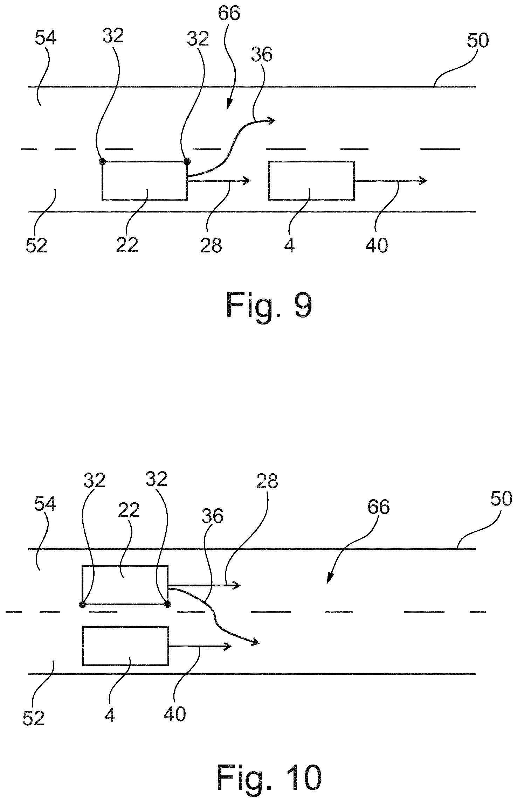

In Fig. 9 ist erneut ein Spurwechsel 66 dargestellt, der als zweite zukünftige Trajektorie 36 herangezogen wird. Hierbei befindet sich das weitere Kraftfahrzeug 22 in Bewegungsrichtung hinter dem Kraftfahrzeug 4, und die der zweiten Fahrbahn 54 zugewandten aktivierten Blinkleuchten 32 sind mittels des Kraftfahrzeugs 4 erfasst.

In Fig. 10 ist eine letzte Situation dargestellt, bei der wiederum als zweite zukünftige Trajektorie 36 der Spurwechsel 66 herangezogen wird. Hierbei befindet sich das Kraftfahrzeug 4 auf der ersten Fahrbahn 52 und das weitere Kraftfahrzeug 22 auf der zweiten Fahrbahn 54, wobei die Fahrtrichtung und die Geschwindigkeit jeweils gleich sind. Mit anderen Worten entspricht die erste zukünftige Trajektorie 28 der zukünftigen Trajektorie 40, die um eine Fahrbahnbreite senkrecht zur Fahrtrichtung versetzt ist. Sobald die der ersten Fahrbahn 52 zugewandten aktivierten Blinkleuchten 32 erfasst sind, wird dem weiteren Kraftfahrzeug 22 die zweite zukünftige Trajektorie 36 zugewiesen, die auf die erste Fahrbahn 52 führt. Hierbei würde bei gleichbleibender Geschwindigkeit der beiden Kraftfahrzeuge 4,22 eine Kollision stattfinden, also der Abstand zwischen den beiden zukünftigen Trajektorien 36,40 den Schwellwert unterschreiten. Infolgedessen wird das Signal mittels der Signalrichtung 10 ausgegeben, wobei zusätzlich zu der Ausgabe auf dem Multifunktionsdisplay die Bremsen des Kraftfahrzeugs 4 sowie die Warnblinkanlage als auch die Hupe des Kraftfahrzeugs 4 betätigt wird, um den Führer des weiteren Kraftfahrzeugs 22 auf die kritische Situation hinzuweisen.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebene Einzelmerkmale auch auf andere Weise miteinander kombinierbar, ohne den Gegenstand der Erfindung zu verlassen.

### Bezugszeichenliste

- 2: Assistenzsystem
- 4: Kraftfahrzeug
- 6: Kamera
- 8: Recheneinheit
- 10: Signaleinrichtung
- 12: Verfahren
- 14: Start
- 16: erster Arbeitsschritt
- 18: Serie
- 20: Bild
- 22: weiteres Kraftfahrzeug
- 24: Kennzeichenbeleuchtung
- 26: zweiter Arbeitsschritt
- 28: erste zukünftige Trajektorie
- 30: dritter Arbeitsschritt
- 32: aktivierte Blinkleuchte
- 34: vierter Arbeitsschritt
- 36: zweite zukünftige Trajektorie
- 38: fünfter Arbeitsschritt
- 40: zukünftige Trajektorie
- 42: sechster Arbeitsschritt
- 44: siebter Arbeitsschritt
- 46: Position
- 48: Ende
- 50: Straße
- 52: erste Fahrbahn
- 54: zweite Fahrbahn
- 56: Abbremsen
- 58: Stehenbleiben
- 60: Abbiegen
- 62: Seitenstraße
- 64: drittes Kraftfahrzeug
- 66: Spurwechsel

## Patentansprüche

1. Verfahren (12) zum Betrieb eines Assistenzsystems (2) eines Kraftfahrzeugs (4), bei dem
- ein weiteres Kraftfahrzeug (22) erfasst wird,
- dem weiteren Kraftfahrzeug (22) eine erste zukünftige Trajektorie (28) zugewiesen wird,
- eine aktivierte Blinkleuchte (32) des weiteren Kraftfahrzeugs (22) erfasst wird, und
- in Abhängigkeit der aktivierten Blinkleuchte (32) dem weiteren Kraftfahrzeug (22) eine zweite zukünftige Trajektorie (36) zugewiesen wird, die von der erste zukünftige Trajektorie (28) abweicht,
wobei die zweite zukünftige Trajektorie (36) des weiteren Kraftfahrzeugs (22) mit einer zukünftigen Trajektorie (40) des Kraftfahrzeugs (4) verglichen wird und ein Signal ausgegeben wird, wenn der Abstand zwischen der zweiten zukünftigen Trajektorie (36) des weiteren Kraftfahrzeugs (22) und der zukünftigen Trajektorie (40) des Kraftfahrzeugs (4) einen Schwellwert unterschreitet,
**dadurch gekennzeichnet, dass**
als zweite zukünftige Trajektorie (36) ein Abbiegen (60) oder Stehenbleiben (58) herangezogen wird, wenn sich die aktivierte Blinkleuchte (32) auf einer keiner weiteren Fahrbahn (52, 54) zugewandten Seite des weiteren Kraftfahrzeugs (22) befindet.

2. Verfahren (12) nach Anspruch 1, bei dem als zweite zukünftige Trajektorie (36) ein Spurwechsel (66) herangezogen wird, wenn sich das weitere Kraftfahrzeug (22) auf einer von zwei parallelen Fahrbahnen (52, 54) befindet, und sich die aktivierte Blinkleuchte (32) auf der der weiteren Fahrbahn (52, 54) zugewandten Seite des weiteren Kraftfahrzeugs (22) befindet.

3. Verfahren (12) nach einem der Ansprüche 1 oder 2, bei dem als zweite zukünftige Trajektorie (36) ein Abbremsen (56) des weiteren Kraftfahrzeugs (22) herangezogen wird, wenn zwei aktivierte Blinkleuchte (32) des weiteren Kraftfahrzeugs (22) erfasst werden, die sich auf unterschiedlichen Seiten des weiteren Kraftfahrzeugs (22) befinden.

4. Verfahren (12) nach einem der Ansprüche 1 bis 3, bei dem das weitere Kraftfahrzeug (22) anhand einer weiteren Leuchte (24) erfasst wird.

5. Verfahren (12) nach einem der Ansprüche 1 bis 4, bei dem die aktivierte Blinkleuchte (32) anhand einer Schwankung der Lichtintensität einer Serie (18) von mittels einer Kamera (6) erstellter Bilder (20) bestimmt wird.

6. Verfahren (12) nach einem der Ansprüche 1 bis 5, bei dem die zweite zukünftige Trajektorie (36) mittels eines Sensorsystems (6) bestätigt wird.

7. Assistenzsystem (2) eines Kraftfahrzeugs (4), das eingerichtet ist ein Verfahren (12) nach einem der Ansprüche 1 bis 6 auszuführen, und das insbesondere eine Kamera (6) aufweist.

## Claims

1. A method (12) for operating an assistance system (2) of a motor vehicle (4), in which
- a further motor vehicle (22) is detected,
- a first future trajectory (28) is assigned to the further motor vehicle (22),
- an activated flashing light (32) of the further motor vehicle (22) is detected, and
- as a function of the activated flashing light (32), a second future trajectory (36) which deviates from the first future trajectory (28) is assigned to the further motor vehicle (22),
wherein the second future trajectory (36) of the further motor vehicle (22) is compared with a future trajectory (40) of the motor vehicle (4), and a signal is output if the distance between the second future trajectory (36) of the further motor vehicle (22) and the future trajectory (40) of the motor vehicle (4) falls below a threshold value,
**characterized in that**
a turning off (60) or stopping (58) is used as the second future trajectory (36), if the activated flashing light (32) is located on a side of the further motor vehicle (22) which does not face a further lane (52, 54).

2. The method (12) according to Claim 1, in which a lane change (66) is used as the second future trajectory (36), if the further motor vehicle (22) is located on one of two parallel lanes (52, 54), and the activated flashing light (32) is located on the side of the further motor vehicle (22) facing the further lane (52, 54).

3. The method (12) according to any one of Claims 1 or 2, in which a braking (56) of the further motor vehicle (22) is used as the second future trajectory (36), if two activated flashing lights (32) of the further motor vehicle (22) are detected, which are located on different sides of the further motor vehicle (22).

4. The method (12) according to any one of Claims 1 to 3, in which the further motor vehicle (22) is detected on the basis of a further light (24).

5. The method (12) according to any one of Claims 1 to 4, in which the activated flashing light (32) is determined on the basis of a fluctuation of the light intensity of a series (18) of images (20) compiled by means of a camera (6).

6. The method (12) according to any one of Claims 1 to 5, in which the second future trajectory (36) is confirmed by means of a sensor system (6).

7. An assistance system (2) of a motor vehicle (4), which is designed to execute a method (12) according to any one of Claims 1 to 6, and which in particular has a camera (6).

## Revendications

1. Procédé (12) pour le fonctionnement d'un système d'assistance (2) d'un véhicule automobile (4) avec lequel
- un autre véhicule automobile (22) est détecté,
- une première trajectoire future (28) est attribuée à l'autre véhicule automobile (22),
- un clignotant activé (32) de l'autre véhicule automobile (22) est détecté, et
- en fonction du clignotant activé (32), une deuxième trajectoire future (36) est attribuée à l'autre véhicule automobile (22), laquelle diffère de la première trajectoire future (28),
la deuxième trajectoire future (36) de l'autre véhicule automobile (22) étant comparée à une trajectoire future (40) du véhicule automobile (4), et un signal étant émis lorsque la distance entre la deuxième trajectoire future (36) de l'autre véhicule automobile (22) et la trajectoire future (40) du véhicule automobile (4) est inférieure à une valeur seuil,
**caractérisé en ce qu'**
un changement de direction (60) ou un maintien dans la voie (58) est utilisé comme deuxième trajectoire future (36) lorsque le clignotant activé (32) se trouve sur un côté non tourné vers une autre voie (52, 54) de l'autre véhicule automobile (22).

2. Procédé (12) selon la revendication 1, un changement de voie (66) étant utilisé comme deuxième trajectoire future (36) lorsque l'autre véhicule automobile (22) se trouve sur une voie parmi deux voies parallèles (52, 54) et que le clignotant activé (32) se trouve sur le côté de l'autre véhicule automobile (22) tourné vers l'autre voie (52, 54).

3. Procédé (12) selon l'une des revendications 1 ou 2, un freinage (56) de l'autre véhicule automobile (22) étant utilisé comme deuxième trajectoire future (36) lorsque deux clignotants activés (32) de l'autre véhicule automobile (22) sont détectés, lesquels se trouvent sur des côtés différents de l'autre véhicule automobile (22).

4. Procédé (12) selon l'une des revendications 1 à 3, avec lequel l'autre véhicule automobile (22) est détecté à l'aide d'un autre feu (24).

5. Procédé (12) selon l'une des revendications 1 à 4, avec lequel le clignotant activé (32) est déterminé à l'aide d'une variation de l'intensité lumineuse d'une série (18) d'images réalisées (20) à l'aide d'une caméra (6).

6. Procédé (12) selon l'une des revendications 1 à 5, la deuxième trajectoire future (36) étant confirmée au moyen d'un système de capteur (6).

7. Système d'assistance (2) d'un véhicule automobile (4), lequel est conçu pour exécuter un procédé (12) selon l'une des revendications 1 à 6, et lequel présente en particulier une caméra (6).
